# DEMANDE DE BREVET EUROPEEN

(11) **EP 0 703 128 A1**
(43) Date de publication de la demande: **27.03.1996**
(21) Numéro de dépôt: 95114849.3
(22) Date de dépôt: 21.09.1995
(51) Int. Cl.: B60S 1/04, F16B 7/04

(54) **Platine-support pour un mécanisme d'essuie-glace**

(30) Priorité: 26.09.1994 FR 9411555
(71) Demandeur: VALEO SYSTEMES D'ESSUYAGE, F-78321 La Verrière (FR)
(72) Inventeur: Lisiecki, Bruno, F-92320 Chatillon (FR)
(74) Mandataire: Gamonal, Didier

(57) **Abrégé**

L'invention propose une platine-support pour un mécanisme d'essuie-glace du type comportant un élément tubulaire (10) dont l'extrémité libre ouverte reçoit un tronçon complémentaire (22) d'un palier (14) de support d'un arbre d'essuie-glace et du type comportant des moyens (30) d'immobilisation axial et en rotation du tronçon cylindrique (22) du palier (14) par rapport à l'élément tubulaire (10, 12), caractérisée en ce que les moyens d'immobilisation comportent un organe transversal d'immobilisation (30) qui coopère avec le tronçon (22) et dont le corps interfère avec la paroi de l'élément tubulaire (10, 12).

## Description

La présente invention concerne une platine-support pour un mécanisme d'essuie-glace.

L'invention concerne plus particulièrement une platine-support du type comportant un élément de structure allongé tubulaire dont l'extrémité libre ouverte reçoit un tronçon complémentaire d'un palier de support d'un arbre d'essuie-glace.

Selon une conception connue, l'élément tubulaire est un élément allongé de structure qui est fixé à une plaque-support de la platine et dont l'extrémité libre permet d'assurer la fixation axiale et en rotation d'un palier de support pour l'arbre d'entraînement d'un essuie-glace qui est entraîné en mouvement de balayage alternatif par une tringlerie qui relie chaque arbre à des composants d'entraînement fixés sur la plaque-support.

Selon une conception connue décrite et représentée dans le document DE-A-2.920.899, le tronçon cylindrique du palier comporte au moins un évidement longitudinal sensiblement parallèle à l'axe du tronçon dans lequel une portion de la paroi en vis-à-vis de l'élément tubulaire est enfoncée par déformation au moyen d'un poinçon selon une direction sensiblement perpendiculaire à l'axe du tube.

Cette technique permet ainsi d'assurer par sertissage la fixation de l'élément de structure tubulaire sur le tronçon de palier en forme de moignon cylindrique reçu à l'intérieur de l'extrémité de l'élément tubulaire.

On constate toutefois que cette technique ne permet pas d'assurer de manière fiable une liaison rigide, en translation et en rotation, et l'on constate, en utilisation, l'apparition d'un jeu axial dans la liaison.

De plus, l'assemblage réalisé selon cette technique est indémontable et ne permet notamment pas le démontage du palier en vue de son remplacement.

Par ailleurs, cette technique nécessite de faire appel à un palier de support dont le corps est réalisé en métal et dont le poids global est donc particulièrement important.

La présente invention a pour but de proposer une conception perfectionnée d'une platine-support pour un mécanisme d'essuie-glace du type comportant un élément tubulaire dont un tronçon d'extrémité libre est fixé à un palier de support d'un arbre d'essuie-glace et qui remédie aux inconvénients qui viennent d'être mentionnés.

Dans ce but, l'invention propose une platine-support du type comportant des moyens d'immobilisation axial et en rotation du tronçon cylindrique du palier par rapport à l'élément tubulaire, caractérisée en ce que les moyens d'immobilisation comportent un organe transversal d'immobilisation qui coopère avec le tronçon et dont le corps interfère avec la paroi de l'élément tubulaire.

Selon d'autres caractéristiques de l'invention :
- l'organe d'immobilisation est une broche qui traverse l'élément tubulaire et qui coopère avec le tronçon du palier ;
- la broche est une plaque ;
- la broche traverse le corps du tronçon de palier;
- la broche coopère avec un méplat formé sur le corps du tronçon et délimité axialement par deux épaulements qui coopèrent avec des bords opposés de la broche;
- il est prévu deux broches parallèles qui coopèrent avec deux méplats parallèles et qui sont reliées entre elles pour constituer un organe unique d'immobilisation ;
- au moins une extrémité de la broche fait saillie transversalement à l'extérieur de l'élément tubulaire et est rabattue pour immobiliser la broche selon sa direction d'introduction ;
- les deux extrémités de la plaque sont rabattues et sont reçues dans un logement formé dans la paroi cylindrique externe de l'élément tubulaire ;
- le palier de support est une pièce moulée en matière plastique ;
- il est prévu des moyens d'indexation angulaire en position d'assemblage de l'élément tubulaire par rapport au tronçon de palier.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective éclatée illustrant un palier de support d'essuie-glace en association avec le tronçon d'extrémité de l'élément tubulaire de structure et avec la broche d'assemblage ;
- la figure 2 est une autre vue schématique en perspective du tronçon d'extrémité de l'élément tubulaire et de la broche d'assemblage ;
- la figure 3 est une vue en section selon la ligne 3-3 de la figure 1 qui illustre les différents composants en position assemblée ; et
- les figures 4 et 5 sont des vues similaires à celles des figures 1 et 3 qui illustrent un second mode de réalisation d'une platine-support perfectionnée selon l'invention.

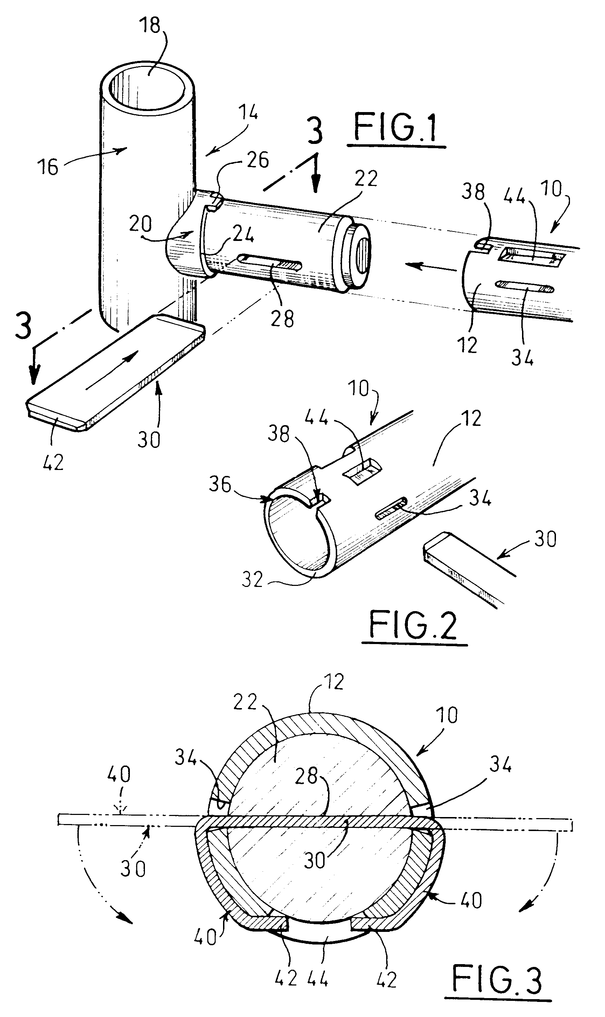

On a représenté sur la figure 1 une portion d'extrémité d'un élément allongé de structure 10 appartenant à un ensemble de platine-support (non représenté en détail) pour un mécanisme d'essuie-glace.

L'élément allongé de structure est un élément tubulaire creux dont le tronçon d'extrémité libre 12 est prévu pour être fixé à un palier 14 de support pour un arbre (non représenté) pour l'entraînement en balayage alternatif d'un bras d'essuie-glace.

Comme on peut le voir sur la figure 1, le corps 16 du palier 14 est une pièce moulée en matière plastique qui comporte notamment un alésage 18 qui permet le montage à rotation, directement ou avec interposition de douilles de palier, du corps d'un arbre d'essuie-glace dont l'extrémité supérieure filetée fait saillie à l'extérieur de l'alésage 18 pour permettre la fixation d'un bras d'essuie-glace.

Le corps 16 peut également comporter un prolongement (non représenté) sur les figures pour permettre sa fixation sur un élément de structure de la caisse d'un véhicule automobile.

Comme on peut le voir sur la figure 1, le corps 16 du palier comporte également un tronçon 20 réalisé venu de matière par moulage pour permettre sa fixation sur le tronçon d'extrémité libre 12 de l'élément tubulaire allongé 10.

Dans le mode de réalisation illustré sur la figure 1, le tronçon 20 se présente essentiellement sous la forme d'un moignon cylindrique de section circulaire 22 qui est délimité axialement, en direction du corps 16 par un épaulement radial de butée 24 qui comporte un cran 26 qui fait saillie axialement et est formé en relief sur la paroi cylindrique externe du tronçon cylindrique 22.

Le tronçon ou moignon cylindrique 22 comporte, dans sa partie centrale, une fente transversale 28.

La fente 28 est de forme oblongue et s'étend dans un plan diamétral du tronçon 22 qui est sensiblement perpendiculaire à l'axe de l'alésage principal 18.

La fente 28 est prévu pour permettre le passage d'une broche 30 d'assemblage et de blocage en position assemblée du palier 14 sur l'élément tubulaire 10.

A cet effet, la broche 30 est réalisée sous la forme d'une plaque dont les dimensions sont complémentaires de celles de la fente 28 afin de permettre son introduction dans cette dernière.

La paroi tubulaire 32 du tronçon d'extrémité libre 12 comporte également deux fentes diamétralement opposées et alignées 34 qui permettent, de par leur dimensionnement et leur positionnement, l'introduction et le passage du corps de la broche d' assemblage en forme de plaque 30.

Le bord annulaire d'extrémité axiale 36 du tronçon d'extrémité libre 12 comporte une encoche axiale 38 dont les dimensions sont complémentaires de celles du cran 26 de manière à permettre une orientation angulaire de l'élément tubulaire 10 par rapport au tronçon cylindrique 22 dans une position dans laquelle les fentes 34 sont alignées avec la fente 28 du tronçon 22 pour permettre l'introduction transversale de la broche 30.

L'assemblage des différents composants illustrés aux figures 1 et 2 s'effectue de la manière suivante.

Le tronçon ou moignon 22 est introduit axialement dans l'extrémité ouverte du tronçon d'extrémité libre 12 de l'élément tubulaire 10 jusqu'à ce le bord annulaire 36 de ce dernier vienne en butée contre l'épaulement radial 24, le cran 26 pénétrant simultanément dans l'encoche 38.

Dans cette position préassemblée, l'opérateur peut alors introduire transversalement la broche d'assemblage 30 dans la position illustrée en trait mixte sur la figure 3.

Après introduction de la broche d'assemblage 30, l'élément allongé de structure tubulaire 10 est immobilisé axialement et en rotation par rapport au tronçon 22.

L'immobilisation en position d'assemblage de la broche 30 s'effectue en rabattant latéralement ses deux tronçons d'extrémité 40 comme cela est illustré sur la figure 3 qui représente les composants en position assemblée et verrouillée. Les tronçons d'extrémité sont rabattus latéralement et les deux extrémités libres 42 pénètrent dans un logement ou évidement 44 formé à cet effet dans la paroi cylindrique externe du tronçon d'extrémité libre 12.

La broche d'assemblage 30 est ainsi parfaitement verrouillée et ne peut s'échapper accidentellement et ses extrémités libres 42 sont effacées à l'intérieur du logement 44 de manière à ne pas faire saillie à l'extérieur de la paroi du tronçon d'extrémité libre 12.

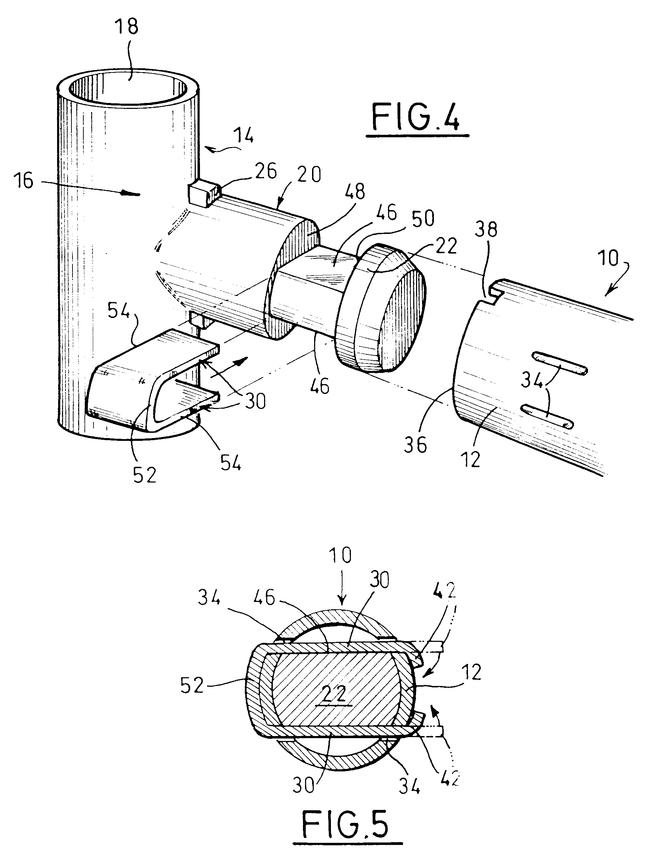

On décrira maintenant le second mode de réalisation de l'invention illustré aux figures 4 et 5 sur lesquelles des éléments identiques ou similaires à ceux illustrés aux figures 1 à 3 sont désignés par les mêmes chiffres de référence.

Dans ce mode de réalisation, le tronçon ou moignon cylindrique 22 du palier 14 comporte deux méplats 46 qui sont parallèles entre eux et parallèles à un plan diamétral sensiblement perpendiculaire à l'axe de l'alésage principal 18.

Les deux méplats 46 sont délimités axialement par deux épaulements radiaux de butée 48 et 50.

Dans ce mode de réalisation, la broche d'assemblage est une broche double constituée par deux plaques parallèles 30 qui sont reliées entre elles par une partie de liaison 52 pour constituer une broche unique d'assemblage.

Les deux plaques 30 sont parallèles entre elles et sont espacées l'une de l'autre d'une distance légèrement supérieure à la distance qui sépare les deux méplats 46.

De manière complémentaire, la paroi tubulaire du tronçon d'extrémité libre de l'élément allongé de structure 10 comporte deux paires de fentes 34.

L'assemblage des composants du second mode de réalisation illustré aux figures 4 et 5 s'effectue d'une manière similaire à celui des composants du premier mode de réalisation.

Après avoir introduit le tronçon de palier 22 à l'intérieur du tronçon d'extrémité libre 12 de l'élément tubulaire 10, et du fait de la présence des moyens 26, 38 d'indexation angulaire, il est possible d'introduire simultanément en une seule opération les deux plaques 30 de la broche d'assemblage dans les fentes 34 comme cela est illustré sur la figure 5.

Le verrouillage en position assemblée de la double broche 30 se termine en rabattant latéralement les extrémités 42 illustrées en silhouette sur la figure 5 avant le verrouillage.

Du fait de la coopération des plaques 30 avec les méplats 46, le palier 14 est immobilisé en rotation par rapport à l'élément tubulaire 10 et les bords longitudinaux et parallèles 54 des plaques 30 coopèrent avec les épaulements 48 et 50 pour immobiliser axialement le palier 14 par rapport à l'élément tubulaire 10.

La conception selon l'invention permet de réaliser un assemblage simple et fiable du palier de support 14 sur l'élément tubulaire 10 en faisant appel à un nombre réduit de composants, tout en permettant de réaliser un assemblage démontable.

La conception selon l'invention permet également de réaliser toute une gamme de platine-support en fonction des différents véhicules avec un minimum de composants et avec un outillage particulièrement réduit dans la mesure où une seule forme de palier de support 14 permet, en faisant varier la position des fentes 34 et de l'encoche 38 de réaliser différentes orientations angulaires du palier 14 par rapport à la plaque-support fixée sur l'élément tubulaire 10.

La réalisation par moulage en matière plastique du corps de palier 14 permet également de réduire de manière importante le poids du palier, la technique d'assemblage selon l'invention ne nécessitant pas de disposer d'un corps de palier en métal qui est nécessaire dans le cas où les assemblages sont réalisés par sertissage.

## Revendications

1. Platine-support pour un mécanisme d'essuie-glace du type comportant un élément tubulaire (10) dont l'extrémité libre ouverte reçoit un tronçon complémentaire (22) d'un palier (14) de support d'un arbre d'essuie-glace et du type comportant des moyens (30) d'immobilisation axial et en rotation du tronçon cylindrique (22) du palier (14) par rapport à l'élément tubulaire (10, 12), caractérisée en ce que les moyens d'immobilisation comportent un organe transversal d'immobilisation (30) qui coopère avec le tronçon (22) et dont le corps interfère avec la paroi de l'élément tubulaire (10, 12).

2. Platine-support selon la revendication 1, caractérisée en ce que l'organe d'immobilisation est une broche (30) qui traverse l'élément tubulaire (12) et qui coopère avec le tronçon (22) du palier.

3. Platine-support selon l'une des revendications 2 ou 3, caractérisée en ce que la broche (30) est une plaque.

4. Platine-support selon la revendication 3 prise en combinaison avec la revendication 2, caractérisée en ce que la broche (30) traverse le corps (22, 28) du tronçon (22) de palier.

5. Platine-support selon la revendication 3 prise en combinaison avec la revendication 2, caractérisée en ce que la broche (30) coopère avec un méplat (46) formé sur le corps du tronçon (22) et délimité axialement par deux épaulements (48, 50) qui coopèrent avec des bords opposés (54) de la broche (30).

6. Platine-support selon la revendication 5, caractérisée en ce qu'il est prévu deux broches parallèles (30) qui coopèrent avec deux méplats parallèles (46) et qui sont reliées entre elles (52) pour constituer un organe unique d'immobilisation.

7. Platine-support selon l'une quelconque des revendications 2 à 6, caractérisée en ce que au moins une extrémité (42) de la broche (30) fait saillie transversalement à l'extérieur de l'élément tubulaire (12) et est rabattue pour immobiliser la broche (30) selon sa direction d'introduction.

8. Platine-support selon la revendication 7, caractérisée en ce que les deux extrémités (42) de la plaque sont rabattues et sont reçues dans un logement (44) formé dans la paroi cylindrique externe de l'élément tubulaire (12).

9. Platine-support selon l'une quelconque des revendications précédentes, caractérisé en ce que le palier de support (14) est une pièce moulée en matière plastique.

10. Platine-support selon l'une quelconque des revendications précédentes, caractérisé en ce qu'il est prévu des moyens (26, 38) d'indexation angulaire en position d'assemblage de l'élément tubulaire (10, 12) par rapport au tronçon de palier (22).
